# EUROPEAN PATENT APPLICATION

(11) **EP 2 461 232 A1**
(43) Date of publication of application: **06.06.2012**
(21) Application number: 10804032.0
(22) Date of filing: 14.05.2010
(51) Int. Cl.: G06F 3/041, G06F 3/044, G09F 9/00

(54) **ELECTRODE SUBSTRATE, METHOD FOR MANUFACTURING ELECTRODE SUBSTRATE, AND IMAGE DISPLAY DEVICE**

(30) Priority: 31.07.2009 JP 2009179944
(71) Applicant: Sharp Kabushiki Kaisha, Osaka-shi, Osaka 545-8522 (JP)
(72) Inventor: YAMATO, Asahi, Osaka-shi, Osaka 545-8522 (JP); NAKATA, Jun, Osaka-shi, Osaka 545-8522 (JP)
(74) Representative: Müller-Boré & Partner Patentanwälte
(86) International application number: PCT/JP2010/003282
(87) International publication number: WO 2011/013279

(57) **Abstract**

In order to achieve reduced resistance of electrode patterns without increasing parasitic capacitances in intersections of the electrode patterns, the present invention provides a touch panel (10) including: first electrode patterns (30) provided on a surface of a transparent substrate (40) and extending in a first direction; and second electrode patterns (20) provided on the surface of the transparent substrate (40) and extending in a second direction that intersects the first direction, each of the first electrode patterns (30) being constituted by transparent electrodes (31) and conductive connecting sections (32) via which the transparent electrodes (31) are connected to each other so as to resemble a string of beads, and each of the second electrode patterns (20) being constituted by transparent electrodes (21) and conductive connecting sections via which the transparent electrodes (21) are connected to each other so as to resemble a string of beads, each of the second electrode patterns (20) intersecting the first electrode patterns (30) via an insulation layer (41) at the respective conductive connecting sections of said each of the second electrode patterns (20), and in at least one of the second electrode patterns (20), at least one of the conductive connecting sections of said at least one of the second electrode patterns (20) being a metal wire (22).

## Description

### Technical Field

The present invention relates to an electrode substrate configured such that a plurality of electrode patterns are provided on a transparent substrate. More specifically, the present invention relates to an electrode substrate usable as a capacitance-type coordinate input device which detects, as a change in capacitance, a position in contact with an object.

### Background Art

In recent years, electric devices such as mobile phone terminals, portable gaming devices, car navigation systems, ticket-vending machines, and terminals at banks each have an input device on the surface of a display screen. This allows a user to operate such an electric device by touching the display screen with a finger or a pen or the like while viewing displayed images.

Examples of such an input device include a resistive film-type touch panel and a capacitance-type touch panel. In view of range of operable temperatures and durability against change over time, the capacitance-type touch panel has been more desired in markets.

There has been known a capacitance-type touch panel in which electrode patterns are provided so as to extend in directions intersecting each other so that, when a finger or a pen etc. makes contact with the touch panel, the touch panel detects an input position upon detecting a change in capacitance between electrodes. The electrode patterns extending in the directions intersecting each other are for example (a) first patterns for detecting an X coordinate and (b) second patterns which are orthogonal to the first pattern and are for detecting a Y coordinate.

For example, Patent Literature 1 discloses a capacitance-type input device in which (i) a first light-transmitting electrode pattern extending in a first direction and (ii) a second light-transmitting electrode pattern extending in a second direction which intersects the first direction are provided on an identical surface of a transparent substrate. According to this capacitance-type input device, one of these electrode patterns is continuous but the other is separated at an intersection of these electrode patterns. Separated electrode patterns are electrically connected to each other via a relay electrode in a layer above the continuous electrode pattern.

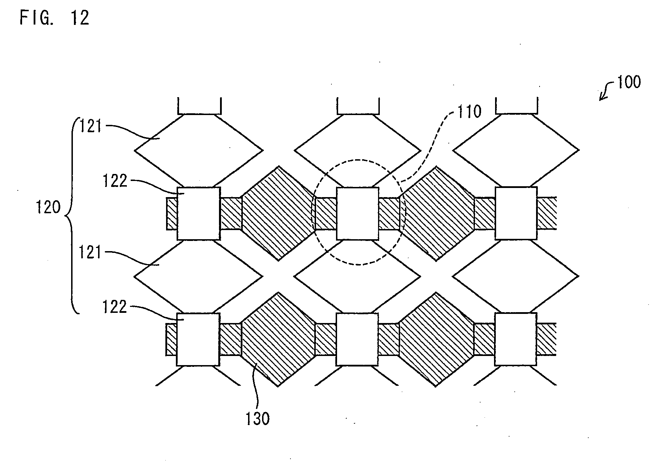

Fig. 12 is a view schematically illustrating a configuration of the capacitance-type input device disclosed in Patent Literature 1. As illustrated in Fig. 12, an input device 100 is configured such that (i) a light-transmitting electrode pattern 130 made of ITO (Indium Tin Oxide) and (ii) a light-transmitting electrode pattern 120 which is made of ITO and intersects the light-transmitting electrode pattern 130 are provided on a substrate. The light-transmitting electrode pattern 120 is separated at an intersection 110 of the light-transmitting electrode pattern 130 and the light-transmitting electrode pattern 120. The light-transmitting electrode pattern 120 is configured such that pad sections 121, which constitute the light-transmitting electrode pattern 120, are electrically connected to each other at the intersection 110 via a light-transmitting relay electrode 122.

### Citation List

### Patent Literature

Patent Literature 1

Japanese Patent Application Publication, Tokukai, No. 2008-310550 A (Publication Date: December 25, 2008)

### Summary of Invention

### Technical Problem

However, a light-transmitting electrode made of ITO etc. has relatively high electric resistivity. This causes the following adverse effects on characteristics of a conventional capacitance-type input device. That is, for example, since electrode patterns have high resistance, a reduction occurs in accuracy or sensitivity in detecting an input position. The inventors of the present invention have tried increasing the size of an input device by use of particularly a conventional capacitance-type input device, and found that the problems of reductions in accuracy and sensitivity become more significant as the size of the input device increases. The reason therefor seems that the electrode patterns need to be increased in length as the size of the input device increases, and this causes an increase in resistance of the electrode patterns.

Regarding the problems, if the relay electrode 122 which is smaller in width than each pad section 121 is increased in area for the purpose of reducing resistance of the electrode patterns, then a parasitic capacitance in the intersection 110 of electrodes becomes large. This eventually results in a reduction in accuracy of the touch panel.

It should be noted that (i) an increase in resistance of the electrode patterns due to employment of ITO and (ii) an increase in parasitic capacitance due to intersection of the electrode patterns seem to occur not only in a touch panel but also in an electrode substrate having the same configuration as the touch panel.

The present invention has been made in view of the problems, and an object of the present invention is to provide an electrode substrate which achieves reduced resistance of electrode patterns without causing an increase in parasitic capacitance.

### Solution to Problem

In order to attain the above object, an electrode substrate in accordance with the present invention includes: first electrode patterns provided on a surface of a transparent substrate and extending in a first direction; and second electrode patterns provided on the surface of the transparent substrate and extending in a second direction that intersects the first direction, each of the first electrode patterns being constituted by (i) transparent electrodes and (ii) conductive connecting sections via which the transparent electrodes are connected to each other so as to resemble a string of beads, and each of the second electrode patterns being constituted by (a) transparent electrodes and (b) conductive connecting sections via which the transparent electrodes are connected to each other so as to resemble a string of beads, each of the second electrode patterns intersecting the first electrode patterns via an insulation layer at the respective conductive connecting sections of said each of the second electrode patterns, and in at least one of the second electrode patterns, at least one of the conductive connecting sections of said at least one of the second electrode patterns being a metal wire.

In this Description, the metal wire encompasses not only a wire made of one type of metal but also a wire made of an alloy of two or more types of metal.

According to the configuration, the first electrode patterns and the second electrode patterns, each of which is constituted by the transparent electrodes connected to each other so as to resemble a string of beads, are provided on the transparent substrate so that the first electrode patterns intersect the second electrode patterns. The second electrode patterns intersect the first electrode patterns at the connecting sections of the second electrode patterns. In each intersection of a first electrode pattern and a second electrode pattern, there is the insulation layer provided between the first electrode pattern and the second electrode pattern.

The transparent electrodes of each of the second electrode patterns are connected to each other so as to resemble a string of beads via the conductive connecting sections. At least one of the connecting sections of all the second electrode patterns is a metal wire. A metal wire is known to have high conductivity as compared to materials such as a semiconductor and metal oxide. Therefore, an electrode pattern that includes a metal wire(s) is to have a resistance lower than that of an electrode pattern that includes no metal wires. Therefore, according to the electrode substrate in accordance with the present invention in which at least one metal wire is included in all of the electrode patterns, resistance as a whole is lower than that of an electrode substrate in which no metal wires are included in the electrode patterns.

Further, since a metal wire has a high conductivity, the size of a connecting section constituted by the metal wire can be made smaller than or equal to the size of a connecting section that is not a metal wire. Therefore, no increase occurs in the size of an area where a first electrode pattern overlaps a second electrode pattern. Accordingly, no increase occurs in parasitic capacitance in each intersection of a first electrode pattern and a second electrode pattern.

That is, according to the configuration, it is possible to provide an electrode substrate which has achieved reduced resistance of the electrode patterns while preventing an increase in parasitic capacitance in each intersection of the first electrode pattern and the second electrode pattern.

Accordingly, in a case where the electrode substrate configured as above is used for example as a capacitance-type coordinate input device, the capacitance-type coordinate input device is capable of detecting a smaller change in capacitance, because the resistance of the electrode patterns is low. This makes it possible to achieve a higher-definition coordinate input device with high detection accuracy.

Further, according to the electrode substrate in accordance with the present invention, since reduced resistivity of the electrode patterns has been achieved, it is possible to suppress an increase in resistance of the electrode patterns even if the electrode patterns are further increased in length. Therefore, the electrode substrate in accordance with the present invention is more suitable for increasing the size of a coordinate input device than a conventional electrode substrate is.

In order to attain the above object, an image display device according to the present invention includes: a display panel for displaying an image; and the foregoing electrode substrate, the electrode substrate being provided on an image display surface side of the display panel.

According to the configuration, it is possible to provide an image display device including an electrode substrate in which the resistance of the electrode patterns is further reduced. Use of such an electrode substrate as a coordinate input device makes it possible to achieve an image display device including a coordinate input device with excellent detection accuracy of input positions.

In order to attain the above object, a method for producing an electrode substrate in accordance with the present invention is a method for producing an electrode substrate, the electrode substrate including, on a surface of a transparent substrate, first electrode patterns extending in a first direction and second electrode patterns extending in a second direction that intersects the first direction, said method including the steps of: forming (i) the first electrode patterns and (ii) transparent electrodes included in the second electrode patterns by forming a transparent electrode film on the surface and patterning the transparent electrode film; forming an insulation film on the transparent substrate so that the insulation film covers the first electrode patterns and the transparent electrodes; partially removing the insulation film so that (a) each of at least one pair of adjacent transparent electrodes between which a first electrode pattern is provided is partially exposed and (b) a part of said first electrode pattern, which part lies between said at least one pair of adjacent transparent electrodes, remains being covered by the insulation film; and forming a metal wire so that exposed parts of said at least one pair of adjacent transparent electrodes are electrically connected to each other.

According to the configuration, it is possible to produce an electrode substrate in which: the first electrode patterns extending in the first direction and the second electrode patterns extending in the second direction that intersects the first direction are provided on a surface of the transparent substrate; and at least one pair of transparent electrodes of the second electrode patterns are electrically connected to each other via the metal wire. Accordingly, it is possible to easily produce an electrode substrate which achieves reduced resistance of the electrode patterns.

### Advantageous Effects of Invention

As has been described, an electrode substrate in accordance with the present invention is configured such that (i) first electrode patterns extending in a first direction and second electrode patterns extending in a second direction that intersects the first direction are provided, (ii) each of the second electrode patterns is constituted by transparent electrodes and conductive connecting sections via which the transparent electrodes are connected to each other so as to resemble a string of beads, and (iii) at least one of the connecting sections of all the second electrode patterns is a metal wire. This makes it possible to reduce resistance of the second electrode patterns. Accordingly, in a case where the electrode substrate in accordance with the present invention is used for example as a coordinate input device, this coordinate input device is improved in accuracy of input position detection.

### Brief Description of Drawings

Fig. 1

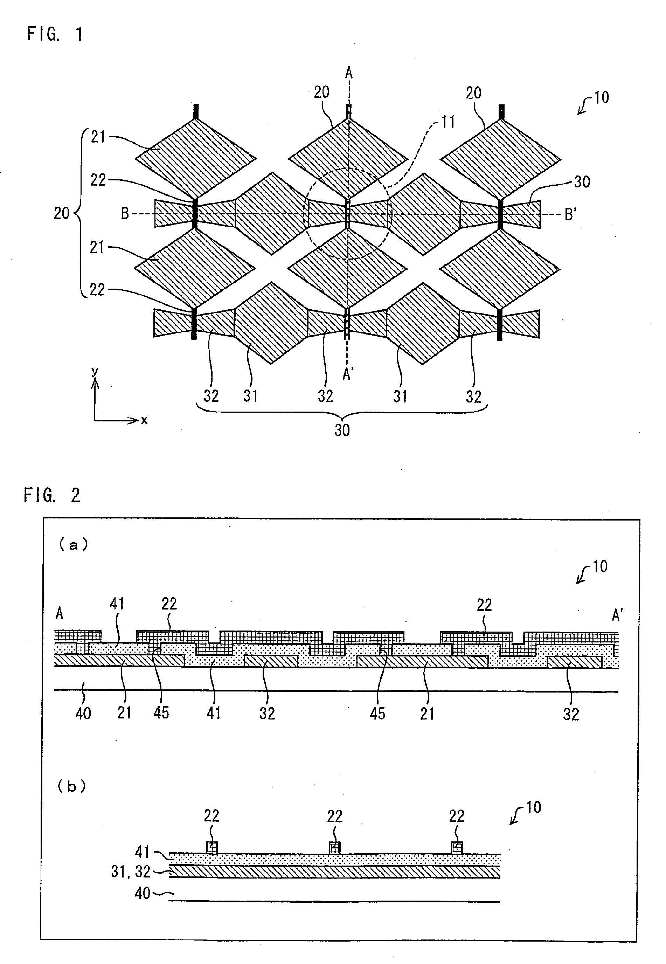

   Fig. 1 is a plan view schematically illustrating a configuration of an electrode substrate of an embodiment of the present invention.
Fig. 2
   Fig. 2 shows cross-sectional views each illustrating the electrode substrate shown in Fig. 1. (a) of Fig. 2 is a cross-sectional surface taken along dotted line A-A' in Fig. 1. (b) of Fig. 2 is a cross-sectional surface taken along dotted line B-B' in Fig. 1.
Fig. 3

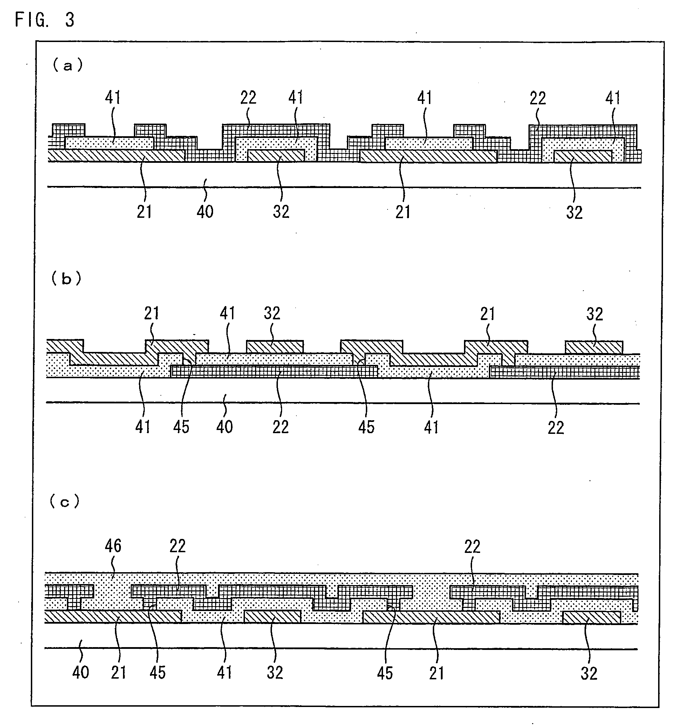

   Fig. 3 shows cross-sectional views each schematically illustrating a configuration of an electrode substrate of another embodiment of the present invention. (a) to (c) of Fig. 3 illustrate respective different configurations.
Fig. 4

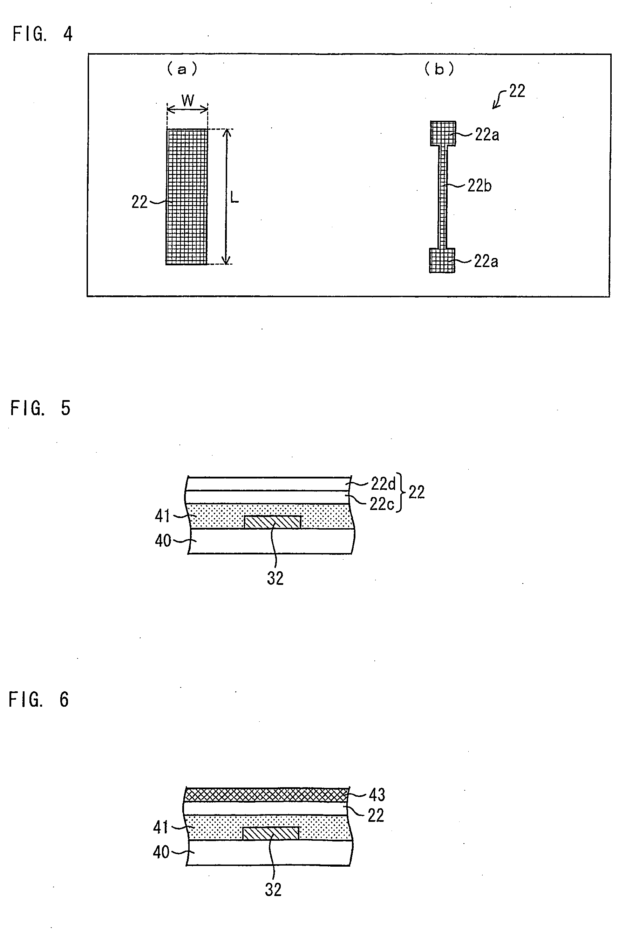

   Fig. 4 shows shapes of metal wires. (a) and (b) of Fig. 4 illustrate respective different shapes.
Fig. 5
   Fig. 5 is a cross-sectional view illustrating an intersection in the electrode substrate of the another embodiment of the present invention.
Fig. 6
   Fig. 6 is a cross-sectional view illustrating an intersection in an electrode substrate of a further embodiment of the present invention.
Fig. 7

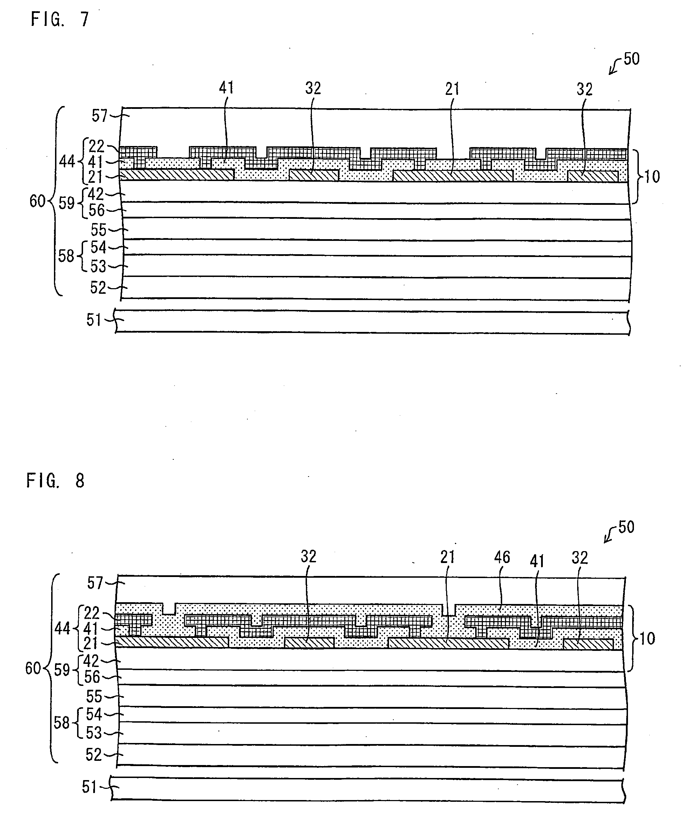

   Fig. 7 is a cross-sectional view schematically illustrating a configuration of a liquid crystal display device of the embodiment of the present invention.
Fig. 8
   Fig. 8 is a cross-sectional view schematically illustrating a configuration of a liquid crystal display device of the another embodiment of the present invention.
Fig. 9

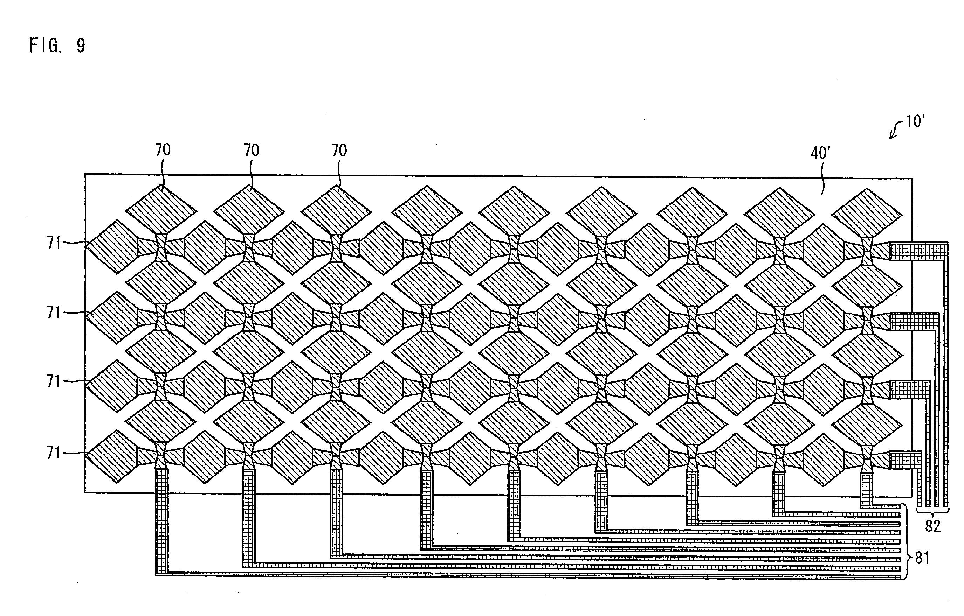

   Fig. 9 is a plan view schematically illustrating a configuration of an electrode substrate including no metal wires.
Fig. 10

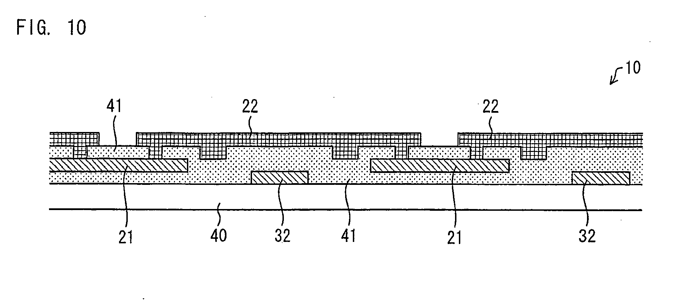

   Fig. 10 is a cross-sectional view schematically illustrating a configuration of the electrode substrate of the another embodiment of the present invention.
Fig. 11

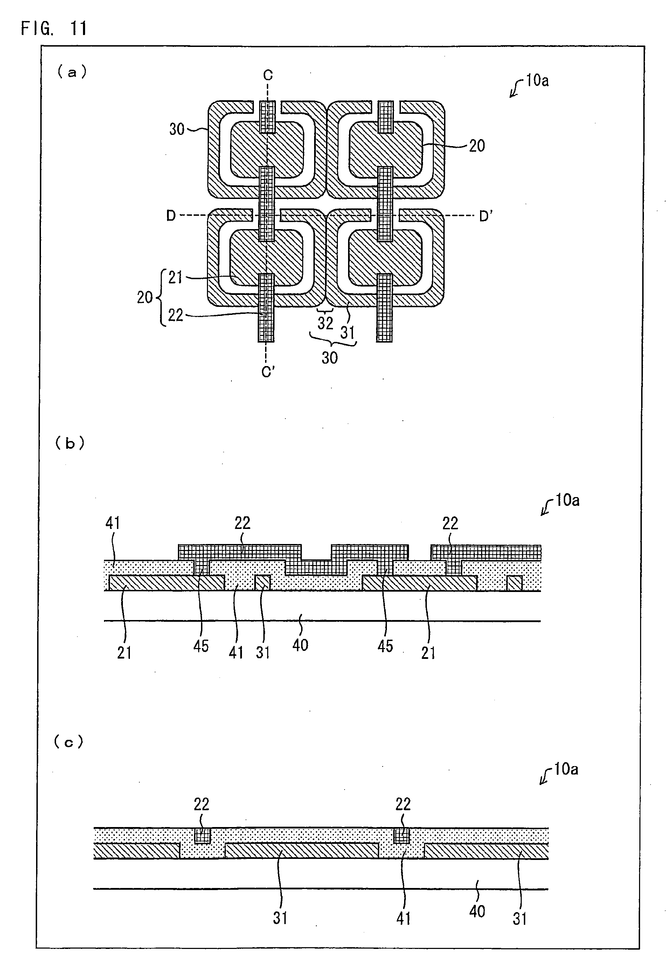

   Fig. 11 shows views each schematically illustrating a configuration of an electrode substrate of the another embodiment of the present invention. (a) of Fig. 11 illustrates a top surface. (b) of Fig. 11 illustrates a cross-sectional surface taken along dotted line C-C' in (a) of Fig. 11. (c) of Fig. 11 illustrates a cross-sectional surface taken along dotted line D-D' in (a) of Fig. 11.
Fig. 12
   Fig. 12 is a plan view schematically illustrating part of a configuration of a conventional input device.

### Description of Embodiments

### Embodiment 1

The following description discusses, with reference to Figs. 1 through 10, an embodiment of an electrode substrate in accordance with the present invention. It should be noted that the electrode substrate of the present embodiment is a capacitance-type touch panel.

### [Touch panel]

### (Overall configuration of touch panel)

Fig. 1 is a plan view schematically illustrating partly a configuration of an input region of the electrode substrate (hereinafter referred to as a touch panel) of the present embodiment. For convenience of description, Fig. 1 does not illustrate a transparent substrate, which is a constituent of the touch panel.

As illustrated in Fig. 1, a touch panel 10 is configured such that, in its input region, first electrode patterns 30 in lines and second electrode patterns 20 in lines are provided on a transparent substrate 40 (see Fig. 2). In a frame region (frame section) which is outside the input region, wires (frame section metal wires) electrically connected to the respective first electrode patterns 30 and wires (frame section metal wires) electrically connected to the respective second electrode patterns 20 are provided. It should be noted that, in the present embodiment, the input region is a region in the touch panel 10 which region (i) is occupied by the first electrode patterns 30 and the second electrode patterns 20 and (ii) is touched by a user with a finger etc. so that the user can carry out input operations. Further, since configurations of the frame region are the same as those of a well-known touch panel, their descriptions are omitted in this Description.

As illustrated in Fig. 1, the first electrode patterns 30 extend in a first direction which is indicated by the arrow x, and the second electrode patterns 20 extend in a second direction which intersects the first direction and is indicated by the arrow y.

According to the touch panel 10 thus configured, voltages are sequentially applied to the first electrode patterns 30 and the second electrode patterns 20 so that these electrode patterns are charged. Under this condition, when a finger or a pen or the like, i.e., an electric conductor, makes contact with some part of the touch panel 10, a capacitor is formed also between (i) the first electrode patterns 30 and the second electrode patterns 20 and (ii) the finger or the like. As a result, a reduction occurs in capacitance. This makes it possible to detect which part is touched by the finger or the like.

### (Configurations of electrode patterns)

Each of the first electrode patterns 30 is constituted by (i) transparent electrodes 31 and (ii) conductive connecting sections 32 via which the transparent electrodes 31 are connected to one another so as to resemble a string of beads. According to the present embodiment, the transparent electrodes 31 and the connecting sections 32 are made of ITO (Indium Tin Oxide) and are integral with one another.

On the other hand, each of the second electrode patterns 20 is constituted by (i) transparent electrodes 21 made of ITO and (ii) metal wires 22 via which the transparent electrodes 21 are connected to one another so as to resemble a string of beads. That is, the metal wires 22 serve as conductive connecting sections via which transparent electrodes are electrically connected with one another.

It should be noted that, although the first electrode patterns 30 and the transparent electrodes 21 are each constituted by a single layer of ITO, each of them may be constituted by two layers of ITO between which an insulation film such as a silicon oxide film is held, in the same manner as in the input device described in the foregoing Patent Literature 1.

According to the present embodiment, in each of the second electrode patterns 20, all of the conductive connecting sections via which the transparent electrodes 21 are electrically connected to one another are constituted by metal wires 22. Note, however, that this does not imply any limitation. In order to reduce resistivity as a whole, any configuration is employable provided that, in at least one of the second electrode patterns 20, at least one of the connecting sections thereof is a metal wire 22. For example, it is possible to employ a configuration in which, in each of the second electrode patterns 20, only one of the connecting sections via which the transparent electrodes 21 are electrically connected to one another is a metal wire 22. Alternatively, it is possible to employ a configuration in which only one of the connecting sections of all the second electrode patterns 20 in the entire input region is a metal wire 22. In a case where only one or some of the connecting sections of the second electrode patterns 20 is/are constituted by a metal wire(s), the other(s) of the connecting sections may be made from the same material as a material from which the transparent electrodes 21 of the second electrode patterns 20 are made.

Since it is preferable that the resistance of each of the second electrode patterns 20 be low, each of the second electrode patterns 20 preferably includes at least one metal wire 22.

Further, since it is preferable that the touch panel 10's performance of detecting an input position be uniform over the entire input region, the second electrode patterns 20 preferably have equal resistivity. To this end, each of the second electrode patterns 20 preferably includes the same number of metal wires 22.

In order to further improve detection performance, it is preferable to minimize resistivity of the second electrode patterns 20. In view of this, it is preferable that all of the connecting sections of the second electrode patterns 20 be metal wires 22.

Each of the transparent electrodes 21 is larger in surface area than a metal wire 22, and each of the transparent electrodes 31 is larger in surface area than a connecting section 32. Therefore, most of the input region in the touch panel 10 is occupied by the transparent electrodes 21 and 31.

Fig. 2 shows cross-sectional views for schematically describing a configuration of the touch panel 10. (a) of Fig. 2 is a cross-sectional surface taken along dotted line A-A' in Fig. 1. (b) of Fig. 2 is a cross-sectional surface taken along dotted line B-B' in Fig. 1.

As illustrated in Figs. 1 and 2, the transparent electrodes 21 are provided, on a surface of the transparent substrate 40, in a layer in which the transparent electrodes 31 and the connecting sections 32 are provided. The transparent electrodes 21 and the first electrode patterns 30 are covered by a transparent insulation layer 41 made of for example SiOₓ, SiNₓ and TaₓOₓ.

In the insulation layer 41, there is a contact hole 45 on a transparent electrode 21 in a position close to a connecting section 32.

Transparent electrodes 21 adjacent to each other in the second direction, between which the connecting section 32 is provided, are electrically connected to each other via a metal wire 22. The metal wire 22 is provided on the insulation layer 41 and inside the contact hole 45. This forms a second electrode pattern 20.

According to a conventional input device 100 shown in Fig. 12, two layers of ITO are provided (a layer in which light-transmitting electrode patterns 130 and pad sections 121 are provided, and a layer in which relay electrodes 122 are provided). Further, a layer of metal wires is separately provided in a frame region.

In contrast, according to the touch panel 10, only a single layer of ITO is provided (a layer in which the first electrode patterns 30 and the transparent electrodes 21 are provided). Further, metal wires in the frame region (not illustrated) can be provided in a layer in which the metal wires 22 of the second electrode patterns 20 are provided. Therefore, according to the touch panel 10, on the whole, it is possible to reduce the number of layers of ITO by one (1) as compared to a conventional input device. This makes it possible to further simplify production processes.

### (Arrangement of electrode patterns)

As illustrated in Figs. 1 and 2, the second electrode patterns 20 are arranged so as to intersect the first electrode patterns 30 at the metal wires 22. The metal wires 22 are provided in a layer above the first electrode patterns 30. Each of the metal wires 22 intersects one of the first electrode patterns 30. The first electrode patterns 30 are arranged so as to intersect the second electrode patterns 20 at the connecting sections 32. Each of the connecting sections 32 intersects one of the second electrode patterns 20.

Fig. 3 shows cross-sectional views illustrating a configuration of the touch panel 10 of another embodiment. (a) to (c) of Fig. 3 describe respective different embodiments.

According to the foregoing embodiment, the transparent electrodes 21 and the metal wires 22 are electrically connected to each other by making contact holes 45 in the insulation layer 41. Note however that, as illustrated in (a) of Fig. 3, the couch panel 10 may be configured such that (i) the insulation layer 41 is partially removed so that a part thereof covering a connecting section 32 remains unremoved and that entire edge portions of transparent electrodes 21 are exposed and (ii) the entire edge portions of the transparent electrodes 21 are electrically connected to a metal wire 22. This configuration is capable of being formed in the production process of the touch panel 10 even if the insulation layer 41 is patterned with a low degree of accuracy. This makes it easier to produce the touch panel 10.

Further, according to the foregoing embodiment, the first electrode patterns 30 and the transparent electrodes 21 of the second electrode patterns 20 are provided on a surface of the transparent electrode 40, the insulation layer 41 is provided in a layer above them, and the metal wires 22 are provided in a layer above the insulation layer 41. Note however that, as illustrated in (b) of Fig. 3, the touch panel 10 may be configured such that the metal wires 22 are provided on the surface of the transparent substrate 40, the insulation layer 41 is provided in a layer above the metal wires 22, and the first electrode patterns 30 and the transparent electrodes 21 of the second electrode patterns 20 are provided in a layer above the insulation layer 41. In this case, a contact hole 45 is made in the insulation layer 41 in a position close to an edge potion of a metal wire 22, and a transparent electrode 21 is provided also inside the contact hole 45 so that the metal wire 22 and the transparent electrode 21 are electrically connected to each other. Further, a connecting section 32 of a first electrode pattern 30 may be provided above the metal wire 22 via the insulation layer 41 so as to intersect the metal wire 22.

As illustrated in (c) of Fig. 3, an insulation layer 46 may further be provided in a layer above the layer of the metal wires 22 of the touch panel 10 of the foregoing embodiment. Since the insulation layer 46 is provided in the layer above the layer of the metal wires 22, a surface is covered by the insulation layer 46. This suppresses a reduction in accuracy of the touch panel 10 serving as an input device, and thus further improves reliability. Note that, needless to say, the insulation layer 46 as shown in (c) of Fig. 3 may be provided as a top layer in the touch panel 10 configured as shown in (a) or (b) of Fig. 3.

In the foregoing descriptions, (i) the transparent electrodes 21 and (ii) the transparent electrodes 31 and the connecting sections 32 are provided in an identical layer; however, they may be provided in different layers. Fig. 10 is a cross-sectional view illustrating a configuration of a touch panel 10 in which (i) the transparent electrodes 21 and (ii) the transparent electrodes 31 and the connecting sections 32 are provided in different layers.

As illustrated in Fig. 10, according to this touch panel 10, the transparent electrodes 31 (not illustrated) and the connecting sections 32 are provided on the transparent substrate 40, and the transparent electrodes 21 are provided in a layer above the transparent electrodes 31 and the connecting sections 32. Note here that the insulation layer 41 is provided between the transparent electrodes 21 and the transparent substrate 40.

### (Another configuration of first electrode pattern)

According to the foregoing embodiment, each of the first electrode patterns 30 is constituted by the transparent electrodes 31 and the connecting sections 32, which are made of ITO and are integral with one another. Note, however, that the connecting sections 32 of the first electrode patterns 30 can also be constituted by metal wires.

In this case, one of all of the connecting sections 32 in the entire input region may be constituted by a metal wire. Alternatively, at least one of the connecting sections 32 of each of the first electrode patterns 30 may be constituted by a metal wire. Alternatively, all of the connecting sections 32 can be constituted by metal wires.

Employing a metal wire(s) in the first electrode patterns 30 makes it possible to reduce also the resistance of the first electrode patterns 30. Accordingly, it is possible to reduce not only the resistance of electrode patterns in the second direction in the input region, but also the resistance of electrode patterns in the first direction in the input region. This makes it possible to improve accuracy in detection of input positions in either direction in the touch panel 10. Further, in a case where at least one of the connecting sections 32 of each of the first electrode patterns 30 is constituted by a metal wire, it is possible to further improve accuracy in detection of input positions over the entire input region. It should be noted that, in view of simplification of production, it is preferable that the first electrode patterns 30 be constituted by the transparent electrodes 31 and the connecting sections 32, which are made of transparent electrode materials such as ITO and are integral with one another.

### (Material for metal wire)

The following description discusses metal from which the metal wires 22 are made.

According to the touch panel 10, reduced resistance of the second electrode patterns 20 is achieved by electrically connecting the transparent electrodes 21 via the metal wires 22 having high conductivity. In view of this, metal from which the metal wires 22 are made is not particularly limited, provided that the metal has an electric resistivity lower than that of an electrode material (ITO in the present embodiment) from which the transparent electrodes 21 are made. Note however that, in particular, metal having an electric resistivity of not more than 10⁻⁷ Ωm makes it possible to more efficiently reduce the resistivity. It is known that, in the production process of a liquid crystal display panel, ITO has a sheet resistance of 50 to 1000 times that of metal (e.g., Al, Cu, Ag or W).

Each of the metal wires 22 may be made of one type of metal. Alternatively, each of the metal wires 22 may be made of an alloy of two or more types of metal, provided that the electric resistivity satisfies the foregoing conditions.

As described above, metal from which the metal wires 22 are made is not particularly limited. Note however that, in view of production and stability, it is preferable to use metal that has been conventionally used in a wire in a liquid crystal display or in a touch panel etc. Examples of such metal include Ag, Cu, Al, W, Ta, Ti Mo and Cr.

In the frame region of the touch panel 10, there are provided wires electrically connected to the first electrode patterns 30 and wires electrically connected to the second electrode patterns 20. Therefore, by using the same metal to form these wires and the metal wires 22 of the second electrode patterns 20, it is possible to form both types of wires in a single process. This allows for further simplification of production of the touch panel 10.

### (Shape of metal wire)

The following description discusses shapes of the metal wires 22 with reference to Fig. 4.

A liquid crystal display is regarded as a defect if a part that possibly causes a reduction in visibility is equal to or larger than 0.03 mm². In other words, a liquid crystal display is regarded as sufficiently usable if a part that possibly causes a reduction in visibility is smaller than 0.03 mm². Usually, the touch panel 10 is used under the condition in which it is placed on an image display section of a display device such as a liquid crystal display. Therefore, if the touch panel 10 has a part that causes a reduction in visibility, the part is preferably smaller than 0.03 mm². Since the metal wires 22 have no light-transmitting properties, a surface area of each of the metal wires 22 as viewed from a direction from which the touch panel 10 is viewed, i.e., a projected area of each of the metal wires 22 in a direction normal to the transparent substrate 40, is preferably smaller than 0.03 mm². In view of this, for example, each of the metal wires 22 can be configured such that the width W is smaller than 0.3 mm and the length L is smaller than 0. 1 mm (refer to (a) of Fig. 4).

It is generally known that the smallest size that humans can visually perceive is about 0.05 mm. Further, it is thought that many people can visually perceive a thing about 0.01 mm² in size. In view of this, it is more preferable that a surface area of each of the metal wires 22 as viewed from a direction from which the touch panel 10 is viewed be smaller than 0.01 mm². In order to reduce the size of each of the metal wires 22 to a degree that cannot be visually perceived by an average user, each of the metal wires 22 can be configured such that the width is smaller than 0.05 mm and the length is smaller than 0.05 mm. For example, each of the metal wires 22 can be configured such that the width is smaller than 0.02 mm and the length is smaller than 0.05 mm.

It should be noted that, in a well-known resistive film-type touch panel, there are dot spacers provided between two substrates. Usually, each of the dot spacers is about 0.15 mm in diameter (0.023 mm²). Therefore, in a case where each of the metal wires 22 is configured to be smaller than 0.02 mm x 0.05 mm (=0.001 mm²), the touch panel 10 should be sufficiently excellent in visibility as compared to such a well-known resistive film-type touch panel.

(b) of Fig. 4 illustrates another shape of a metal wire 22. As illustrated in (b) of Fig. 4, a middle part 22b of the metal wire 22 can be configured to have the minimum width in the process (1 µm to 10 µm). Note however that, in this case, contact parts 22a at both ends of the metal wire 22, which contact parts 22a make contact with transparent electrodes 21, need to be larger in width than the middle part 22b. This is because a metal wire 22 needs to be provided on the contact hole 45 in the insulation layer 41, and the minimum width of a short side of the contact hole 45 in the insulation layer 41 is substantially equal to the minimum width in the process.

In a case where a connecting section between transparent electrodes 21 is made of ITO or the like, the resistivity of the connecting section increases as the width of the connecting section is reduced. On the other hand, in a case where the connecting section is constituted by a metal wire 22, it is possible to suppress an increase in resistivity even if the width of the connecting section is reduced, because metal is generally more excellent in conductivity than a transparent electrode material such as ITO.

Further, since the second electrode patterns 20 intersect the first electrode patterns 30 at the metal wires 22, it is possible to reduce the size of each area where a first electrode pattern 30 and a second electrode pattern 20 overlap each other, by reducing the widths of the metal wires 22. As such, employing the metal wires 22 makes it possible to reduce parasitic capacitances in the intersections.

### (External configuration of metal wire)

According to the present embodiment, each of the metal wires 22 consists of a single layer. That is, each of the metal wires 22 is made of one type of metal. Note, however, that each of the metal wires 22 may consist of a plurality of layers. In this case, an outermost layer can be made of metal having a reflectivity lower than that of metal from which the other layer(s) is/are made. This makes it possible to suppress light reflection at the surfaces of the metal wires 22, thereby making the metal wires 22 less visible.

Fig. 5 is a cross-sectional view illustrating an intersection 11 in the touch panel 10 in which a metal wire 22 consists of a plurality of layers.

As illustrated in Fig. 5, according to this touch panel 10, the metal wire 22 has a double-layered structure constituted by a first layer 22c and a second layer 22d. The first layer 22c is on the insulation layer 41 side, and the second layer 22d is a layer above the first layer 22c and is an outermost layer (i.e., an outermost layer located on a side opposite to a side that faces the transparent substrate 40). For example, the first layer 22c of the metal wire 22 can be made of Ag, Cu and/or Al etc., and the second layer 22d of the metal wire 22 can be made of Ti, Ta or Mo etc. which has a reflectivity lower than that of metal from which the first layer 22c is made. This makes it possible to suppress light reflection at the surfaces of the metal wires 22 as compared to a case where the metal wires 22 are made only of Ag, Cu and/or A1. This makes it possible to make the metal wires 22 less visible.

Although Fig. 5 illustrates the metal wire 22 having a double-layered structure, the metal wire 22 may consist of three or more layers. This configuration also makes it possible to suppress light reflection at the surfaces of the metal wires 22 to thereby make the metal wires 22 less visible, by employing, as the outermost layer, metal that has a lower reflectivity.

Instead of employing the metal wires 22 each consisting of a plurality of layers and using as their outermost layers metal that has a lower reflectivity, a black matrix can be provided in a layer above the metal wires 22. This makes it possible to reduce reflection in the intersections 11.

Fig. 6 is a cross-sectional view illustrating an intersection 11 in the touch panel 10 in which a black matrix 43 is provided on a metal wire 22.

As illustrated in Fig. 6, according to this touch panel 10, the black matrix 43 is provided in a layer above the metal wire 22. The black matrix 43 can be made from a composition in which a black coloring agent is dispersed. For example, the black matrix 43 can be made mainly from a metal chromium film and titanium oxide etc. This configuration also makes it possible to make the metal wires 22 less visible.

### (Transparent electrode)

The touch panel 10 can be used under a condition in which it is placed on an image display section of a display device for displaying images, such as for example a liquid crystal display panel of a liquid crystal display device. Therefore, in order not to disturb visibility of images to be displayed, the electrodes of the first electrode patterns 30 and the second electrode patterns 20 are constituted by transparent electrodes. Examples of materials from which the transparent electrodes 21 and 31 are made include: conductive metal oxide films such as ITO, IZO (Indium Zinc Oxide), IZGO (Indium Zinc Gallium Oxide), GZO (Gallium Zinc Oxide), AZO (Aluminium Zinc Oxide), TiO₂: Nb and Mg(OH)₂: C; conductive polymer films; ITO nanoink films; and CNT (Carbon Nano Tube) nanoink films. Out of these, ITO or IZO is preferable in view of conductivity and production costs.

Each of the transparent electrodes 21 and 31 can be in the shape of lozenge in the same manner as in a well-known capacitance-type touch panel. Further, each of the transparent electrodes 21 and 31 is preferably 10 nm to 1000 nm in thickness, in view of production and resistivity.

### (Direction of second electrode pattern in touch panel)

In a case where (i) the touch panel 10 is in the shape of a rectangle, (ii) one type of the first and second electrode patterns 30 and 20 are provided in a direction along a long side of the rectangle and (iii) the other are provided in a direction along a short side of the rectangle, electrode patterns provided along the long side are larger in length than those provided along the short side. As the electrode patterns are increased in length, their resistance increases. This causes a reduction in properties of the touch panel. For this reason, it is preferable that the electrode patterns provided along the long side be the second electrode patterns 20.

Fig. 9 is a view illustrating a configuration of a touch panel having a rectangular shape. For convenience of description, this touch panel includes no metal wires 22.

As illustrated in Fig. 9, according to a touch panel 10', electrode patterns 71 in lines and electrode patterns 70 in lines are provided on a transparent substrate 40'. Each of the electrode patterns 71 is arranged so as to extend in a direction of a long side of the transparent substrate 40', and each of the electrode patterns 70 is arranged so as to extend in a direction of a short side of the transparent substrate 40'. Each of the electrode patterns 71 intersects the electrode patterns 70. An end of each of the electrode patterns 71 is connected to a wire 82, and an end of each of the electrode patterns 70 is connected to a wire 81.

According to the touch panel 10', the electrode patterns 71 are larger in resistivity than the electrode patterns 70. Therefore, by employing the metal wires 22 in the electrode patterns 71 to cause the electrode patterns 71 to serve as the second electrode patterns 20, it is possible to bring about a larger effect. That is, it is possible to further suppress a reduction in properties of the touch panel 10.

It should be noted that, in a case where all of the connecting sections of one type of the electrode patterns are constituted by metal wires 22, the number of the metal wires 22 used is the same between a case where the metal wires 22 are employed in the electrode patterns 71 and a case where the metal wires 22 are employed in the electrode patterns 70. Therefore, in view of visibility, either the connecting sections of the electrode patterns 71 or the connecting sections of the electrode patterns 70 may be constituted by the metal wires 22.

As described earlier, according to the touch panel 10, in the second electrode patterns 20, the transparent electrodes 21 are connected to one another via the metal wires 22. This makes it possible to reduce the resistivity of electrode patterns in the input region, and thus makes it possible to improve accuracy of the touch panel.

Further, as a touch panel is increased in size, the electrode patterns increase in length and then increase in resistivity. This causes a reduction in accuracy of the touch panel. Therefore, the touch panel 10, in which the reduced resistivity of the electrode patterns has been achieved, is suitably usable for increasing the size of a touch panel.

Further, according to the touch panel 10, it is possible to reduce the widths of the metal wires 22 without increasing their resistivity, as compared to a case where the transparent electrodes 21 are connected to one another via ITO or the like. Since the second electrode patterns 20 intersect the first electrode patterns 30 at the metal wires 22, it is possible to reduce the size of each area where a first electrode pattern 30 and a second electrode pattern 20 overlap each other, by reducing the widths of the metal wires 22. Therefore, employing the metal wires 22 makes it possible to reduce parasitic capacitances in the intersections. Since an increase in parasitic capacitances in the intersections causes a reduction in accuracy of the touch panel, it is also possible to suppress, in the touch panel 10, a reduction in accuracy of the touch panel due to an increase in parasitic capacitance.

### [Image display device]

The following description discusses, with reference to Figs. 7 and 8, an image display device including the touch panel 10. It should be noted that, although the following description discusses a touch panel-included liquid crystal display device, an image display device in accordance with the present invention is not limited to the liquid crystal display device provided that the image display device includes (i) a display panel for displaying images and (ii) an electrode substrate in accordance with the present invention provided on the image display surface-side of the display panel. For example, the image display device may be a touch panel-included organic EL display device etc.

As described earlier, the touch panel 10 can be used in a state where it is placed on a surface of a liquid crystal display panel. In this case, it is possible to use a glass substrate included in the liquid crystal display panel as the transparent substrate 40 of the touch panel 10.

Fig. 7 is a cross-sectional view schematically illustrating a configuration of a liquid crystal display device including the touch panel 10.

As illustrated in Fig. 7, a liquid crystal display device (image display device) 50 includes a touch panel-included liquid crystal display panel (electrode substrate, display panel) 60 and a backlight 51.

The touch panel-included liquid crystal display panel 60 includes (i) a polarizing plate 52, (ii) a thin film transistor substrate 58, (iii) a liquid crystal layer 55, (iv) a counter substrate 59, (v) an electrode section 44 of the touch panel 10, and (vi) a polarizing plate 57, which are stacked in this order from a side to be irradiated by the backlight 51.

The thin film transistor substrate 58 is constituted by a glass substrate 53 having a wire layer 54 on its surface facing the liquid crystal layer 55. The wire layer 54 is a layer in which TFTs, thin film structures such as an alignment film and ITO, resin and wires are provided.

The counter substrate 59 is constituted by a glass substrate 42 having a color filter layer 56 on its surface facing the liquid crystal layer 55. The color filter layer 56 is a layer in which a color filter, thin film structures such as an alignment film and ITO, resin and wires are provided.

The electrode section 44 of the touch panel 10 is intended to include the first electrode patterns 30, the second electrode patterns 20 and the insulation layer 41, and other necessary wires provided on the transparent substrate 40 of the touch panel 10.

According to the liquid crystal display device 50, the glass substrate 42 of the counter substrate 59 serves also as the transparent substrate of the touch panel 10. That is, on the image display surface-side surface of the glass substrate 42, (i) the first electrode patterns 30 and (ii) the transparent electrodes 21 of the second electrode patterns 20 are provided directly. This makes it possible to omit one (1) layer of a transparent substrate, as compared to a case where a separately-prepared touch panel 10 is placed on the liquid crystal display panel. Accordingly, it is possible to further reduce the thickness of the entire touch panel-included liquid crystal display panel 60 and of the entire liquid crystal display device 50.

The touch panel-included liquid crystal display panel 60 is constituted by including the touch panel 10. Therefore, by producing the liquid crystal display device 50 by incorporating thereto the touch panel-included liquid crystal display panel 60, it is possible to provide a liquid crystal display device 50 including a touch panel that is excellent in performance of input detection.

Fig. 8 is a view illustrating a liquid crystal display device 50 having another configuration.

As illustrated in Fig. 8, according to the liquid crystal display device 50, the insulation layer 46 is further provided between the metal wires 22 and the polarizing plate 57. Providing the insulation layer 46 between the metal wires 22 and the polarizing plate 57 improves reliability.

### [Method for producing touch panel]

The touch panel 10 can be produced in the following manner.

First, an ITO film (transparent electrode film) which is 10 nm to 1000 nm in thickness is formed on one surface of the transparent substrate 40. After the ITO film is formed, the ITO film is patterned by etching using a mask to form (i) the first electrode patterns 30 and (ii) the transparent electrodes 21 of the second electrode patterns 20.

Next, the insulation layer (insulation film) 41 which is 10 nm to 1000 nm in thickness is formed on the transparent substrate 40 so as to cover the first electrode patterns 30 and the transparent electrodes 21.

After the insulation layer 41 is formed, a contact hole 45 is made in the insulation layer 41 by etching so that each of adjacent transparent electrodes 21 between which a first electrode pattern 30 is provided is partially exposed. Alternatively, edge portions of each of the adjacent transparent electrodes 21 are exposed by etching while keeping part of the first electrode pattern 30, which part lies between the adjacent transparent electrodes 21, covered by the insulation layer 41.

Next, a metal wire 22 which is 10 nm to 1000 nm in thickness is formed so that exposed parts of the adjacent transparent electrodes 21 are electrically connected to each other. The metal wire 22 can be formed by a well-known method such as sputtering or evaporation. When forming the electrode wire 22, it is possible to concurrently form also wires (frame section metal wires) to be connected to the first electrode patterns 30 and wires (frame section metal wires) to be connected to the second electrode patterns 20, which wires are in the frame region. According to a conventional touch panel, it is necessary to form metal wires in the frame region separately from each electrode pattern, because the metal wires are provided only in the frame region. In contrast, according to the method of the present embodiment, it is possible to form the metal wires in the frame region concurrently with the second electrode patterns 20. This makes it possible to reduce the number of production processes for the touch panel.

After the electrode wire 22 is formed, the insulation layer 46 can be further formed if needed.

### Embodiment 2

The following description discusses another embodiment of the present invention with reference to Fig. 11. According to the present embodiment, for the purpose of describing differences between the present embodiment and Embodiment 1, for convenience of description, members having functions identical to those illustrated in Embodiment 1 are assigned identical referential numerals, and their descriptions are omitted here.

Fig. 11 is a view schematically illustrating a configuration of a touch panel (electrode substrate) 10a. (a) of Fig. 11 illustrates a top surface viewed from a direction normal to the transparent substrate 40. (b) of Fig. 11 and (c) of Fig. 11 illustrate cross-sectional surfaces taken along dotted line C-C' and dotted line D-D' in (a) of Fig. 11, respectively.

As illustrated in (a) to (c) in Fig. 11, according to the touch panel 10a, a transparent electrode 31 and a connecting section 32 of each of the first electrode patterns 30 are integral with each other, and such an integrated transparent electrode 31 is arranged so as to surround a transparent electrode 21 of a second electrode pattern 20. That is, each of the first electrode patterns 30 is constituted by substantially ring-shaped transparent electrodes 32, each of which is in the form of a partly-opened ring and which are connected to one another so as to resemble a string of beads. Each of the second electrode patterns 20 intersects the ring-shaped first electrode patterns 30 at the metal wires 22.

According also to the configuration shown in Fig. 11, since the transparent electrodes 21 are connected with one another via the metal wires 22, it is possible to reduce the electric resistivity of the second electrode patterns 20 as compared to a conventional electrode substrate. Further, since the metal wires 22 employed here make it possible to reduce the width of each connecting section between transparent electrodes 21, it is possible to reduce the size of each area where a second electrode pattern 20 overlaps a first electrode pattern 30. This makes it possible to reduce parasitic capacitances.

The present invention is not limited to the descriptions of the respective embodiments, but may be altered within the scope of the claims. An embodiment derived from a proper combination of technical means altered within the scope of the claims is encompassed in the technical scope of the invention.

The electrode substrate in accordance with the present invention is preferably configured such that, in each of the second electrode patterns, at least one of the conductive connecting sections of said each of the second electrode patterns is a metal wire.

According to the configuration, it is possible to reduce the resistance of each of the second electrode patterns as compared to a conventional technique. This makes it possible to achieve reduced resistance in the entire region where the second electrode patterns are provided.

Accordingly, for example in a case where the electrode substrate configured as above is used as a capacitance-type coordinate input device, it is possible to achieve a coordinate input device with higher detection accuracy. This is because reduced resistance of electrode patterns has been achieved in the entire input region where the second electrode patterns are provided.

Further, the electrode substrate in accordance with the present invention is preferably configured such that the metal wire is made of metal having an electric resistivity of not more than 10⁻⁷ Ωm.

According to the configuration, the electric resistivity of the metal wire is far lower than that of the transparent electrodes. This makes it possible to achieve dramatically reduced resistance of the electrode patterns including the metal wire, as compared to a conventional technique.

Further, the electrode substrate in accordance with the present invention is preferably configured such that a projected area of the metal wire in a direction normal to the transparent substrate is smaller than 0.03 mm².

Generally, a liquid crystal display is regarded as a defect as having a problem in visibility if a part that possibly causes a reduction in visibility is equal to or larger than 0.03 mm².

In this regard, according to the configuration, the electrode substrate in accordance with the present invention does not cause a problem in visibility even when being applied to a liquid crystal display device. This makes it possible to prevent from giving a feeling of strangeness to a user when the user views this liquid crystal display.

Further, the electrode substrate in accordance with the present invention is preferably configured such that the metal wire includes a plurality of layers; and an outermost layer of the plurality of layers, which outermost layer is on a side opposite to a side that faces the transparent substrate, is made of metal having a reflectivity lower than that of metal from which the other(s) of the plurality of layers is/are made.

According to the configuration, it is possible to further suppress light reflection in an area where the metal wire is provided. This makes it possible to make the metal wire less visible to a user who views the electrode substrate or views a liquid crystal display including the electrode substrate.

Further, the electrode substrate in accordance with the present invention is preferably configured such that a black matrix is provided in a layer above the metal wire.

According to the configuration, it is possible to prevent light reflection by the metal wire. This makes it possible to make the metal wire less visible to a user who views the electrode substrate or views a liquid crystal display including the electrode substrate.

Further, the electrode substrate in accordance with the present invention is preferably configured such that a length of each of the second electrode patterns in the second direction is larger than a length of each of the first electrode patterns in the first direction.

According to the configuration, the second electrode patterns are larger in length than the first electrode patterns. As the length of an electrode pattern increases, the resistance of the electrode pattern increases. That is, the metal wire is provided in electrode patterns that are larger in resistance. Accordingly, it is possible to more effectively reduce resistance, and thus possible to achieve reduced resistance in the entire region where the electrode patterns are provided.

The electrode substrate in accordance with the present invention can be configured such that the transparent electrode is made of ITO.

The electrode substrate in accordance with the present invention is preferably configured such that the transparent electrodes of each of the first electrode patterns and the conductive connecting sections of said each of the first electrode patterns are made of an identical material and are integral with each other.

According to the configuration, it is possible to concurrently form the connecting sections and the transparent electrodes in a process of forming the first electrode patterns. This makes it reasonable and easy to produce the electrode substrate.

Further, the electrode substrate in accordance with the present invention is preferably configured such that the insulation layer is a transparent layer.

According to the configuration, the electrode substrate in accordance with the present invention does not cause a problem in visibility even when being applied to a liquid crystal display device. This makes it possible to prevent from giving a feeling of strangeness to a user when the user views this liquid crystal display.

The image display device in accordance with the present invention can be configured such that the display panel is a liquid crystal display panel including: a thin film transistor substrate on which a thin film transistor is provided; a counter substrate facing the thin film transistor substrate; and a liquid crystal layer held by the thin film transistor substrate and the counter substrate.

Further, the image display device in accordance with the present invention is preferably configured such that a substrate included in the counter substrate serves also as the transparent substrate; and the first electrode patterns and the second electrode patterns are provided on a surface of the substrate included in the counter substrate, which surface is opposite to a surface that faces the liquid crystal layer.

According to the configuration, the counter substrate of the liquid crystal display panel serves as the transparent substrate of the electrode substrate. Therefore, the number of substrates is small as compared to a case where an electrode substrate already including a transparent substrate is placed on the liquid crystal display panel. This makes it possible to reduce the thickness of the entire liquid crystal display panel including the electrode substrate. Accordingly, for example when the electrode substrate is used as a coordinate input device, it is possible to provide an image display device including a coordinate input device-included liquid crystal display panel smaller in thickness.

The method for producing the electrode substrate in accordance with the present invention is preferably configured such that the electrode substrate includes, in a frame section which is a peripheral part of the electrode substrate, frame section metal wires that are electrically connected to the respective first electrode patterns and frame section metal wires that are electrically connected to the respective second electrode patterns, and in the step of forming the metal wire, these frame section metal wires are formed concurrently with the metal wire.

According to the configuration, it is possible to concurrently form (i) the metal wires in the frame region which is a peripheral part of the electrode substrate and (ii) the metal wires constituting the electrode patterns. This makes it possible to form, without increasing the number of processes, the second electrode patterns including the metal wires.

### Industrial Applicability

An electrode substrate in accordance with the present invention is usable in a capacitance-type touch panel, and is applicable to an image display section of each of electric devices such as mobile phone terminals, portable gaming devices, car navigation systems, ticket-vending machines and terminals at banks.

### Reference Signs List

- 10: Touch panel (electrode substrate)
- 10a: Touch panel (electrode substrate)
- 10': Touch panel
- 11: Intersection
- 20: Second electrode pattern
- 21: Transparent electrode
- 22: Metal wire
- 22a: Contact part
- 22b: Middle part
- 22c: First layer
- 22d: Second layer
- 30: First electrode pattern
- 31: Transparent electrode
- 32: Connecting section
- 40, 40': Transparent substrate
- 41, 46: Insulation layer
- 42: Glass substrate
- 43: Black matrix
- 44: Electrode section
- 45: Contact hole
- 50: Liquid crystal display device
- 51: Backlight
- 52: Polarizing plate
- 53: Glass substrate
- 54: Wire layer
- 55: Liquid crystal layer
- 56: Color filter layer
- 57: Polarizing plate
- 58: Thin film transistor substrate
- 59: Counter substrate
- 60: Touch panel-included liquid crystal display panel
- 70, 71: Electrode pattern
- 81, 82: Wire

## Claims

1. An electrode substrate comprising:
first electrode patterns provided on a surface of a transparent substrate and extending in a first direction; and
second electrode patterns provided on the surface of the transparent substrate and extending in a second direction that intersects the first direction,
each of the first electrode patterns being constituted by (i) transparent electrodes and (ii) conductive connecting sections via which the transparent electrodes are connected to each other so as to resemble a string of beads, and each of the second electrode patterns being constituted by (a) transparent electrodes and (b) conductive connecting sections via which the transparent electrodes are connected to each other so as to resemble a string of beads,
each of the second electrode patterns intersecting the first electrode patterns via an insulation layer at the respective conductive connecting sections of said each of the second electrode patterns, and
in at least one of the second electrode patterns, at least one of the conductive connecting sections of said at least one of the second electrode patterns being a metal wire.

2. The electrode substrate according to claim 1, wherein, in each of the second electrode patterns, at least one of the conductive connecting sections of said each of the second electrode patterns is a metal wire.

3. The electrode substrate according to claim 1 or 2, wherein the metal wire is made of metal having an electric resistivity of not more than 10⁻⁷ Ωm.

4. The electrode substrate according to any one of claims 1 through 3, wherein a projected area of the metal wire in a direction normal to the transparent substrate is smaller than 0.03 mm².

5. The electrode substrate according to any one of claims 1 through 4, wherein:
the metal wire includes a plurality of layers; and
an outermost layer of the plurality of layers, which outermost layer is on a side opposite to a side that faces the transparent substrate, is made of metal having a reflectivity lower than that of metal from which the other(s) of the plurality of layers is/are made.

6. The electrode substrate according to any one of claims 1 through 4, wherein a black matrix is provided in a layer above the metal wire.

7. The electrode substrate according to any one of claims 1 through 6, wherein a length of each of the second electrode patterns in the second direction is larger than a length of each of the first electrode patterns in the first direction.

8. The electrode substrate according to any one of claims 1 through 7, wherein the transparent electrodes are made of ITO.

9. The electrode substrate according to any one of claims 1 through 8, wherein the transparent electrodes of each of the first electrode patterns and the conductive connecting sections of said each of the first electrode patterns are made of an identical material and are integral with each other.

10. The electrode substrate according to any one of claims 1 through 9, wherein the insulation layer is a transparent layer.

11. An image display device comprising:
a display panel for displaying an image; and
an electrode substrate recited in any one of claims 1 through 10,
the electrode substrate being provided on an image display surface side of the display panel.

12. The image display device according to claim 11, wherein the display panel is a liquid crystal display panel including:
a thin film transistor substrate on which a thin film transistor is provided;
a counter substrate facing the thin film transistor substrate; and
a liquid crystal layer held by the thin film transistor substrate and the counter substrate.

13. The image display device according to claim 12, wherein:
a substrate included in the counter substrate serves also as the transparent substrate; and
the first electrode patterns and the second electrode patterns are provided on a surface of the substrate included in the counter substrate, which surface is opposite to a surface that faces the liquid crystal layer.

14. A method for producing an electrode substrate, the electrode substrate including, on a surface of a transparent substrate, first electrode patterns extending in a first direction and second electrode patterns extending in a second direction that intersects the first direction,
said method comprising the steps of:
forming (i) the first electrode patterns and (ii) transparent electrodes included in the second electrode patterns by forming a transparent electrode film on the surface and patterning the transparent electrode film;
forming an insulation film on the transparent substrate so that the insulation film covers the first electrode patterns and the transparent electrodes;
partially removing the insulation film so that (a) each of at least one pair of adjacent transparent electrodes between which a first electrode pattern is provided is partially exposed and (b) a part of said first electrode pattern, which part lies between said at least one pair of adjacent transparent electrodes, remains being covered by the insulation film; and
forming a metal wire so that exposed parts of said at least one pair of adjacent transparent electrodes are electrically connected to each other.

15. The method according to claim 14, wherein:
the electrode substrate includes, in a frame section which is a peripheral part of the electrode substrate, frame section metal wires that are electrically connected to the respective first electrode patterns and frame section metal wires that are electrically connected to the respective second electrode patterns, and
in the step of forming the metal wire, these frame section metal wires are formed concurrently with the metal wire.
